# EUROPEAN PATENT APPLICATION

(11) **EP 3 292 752 A1**
(43) Date of publication of application: **14.03.2018**
(21) Application number: 17189526.1
(22) Date of filing: 06.09.2017
(51) Int. Cl.: A01G 17/08, B65B 27/10, B65H 35/00

(54) **BINDING MACHINE FOR GARDENING**

(30) Priority: 08.09.2016 KR 20160115571
(71) Applicant: Cho, Nam Sun, Daegu 42142 (KR)
(72) Inventor: Cho, Nam Sun, Daegu 42142 (KR)
(74) Representative: Weickmann & Weickmann PartmbB

(57) **Abstract**

Provided is a binding machine for gardening including a tape case (4) having a case cover (4a) that may be opened/closed and a tape guide (2) having a guide cover (2a) that may be opened/closed. At least one of a first connecting portion (10) between the case cover (4a) and the tape case (2a) and a second connecting portion (20) between the guide cover (2a) and the tape guide (2) may include a sleeve including a cylindrical supporting shaft and an inner diameter portion in which the supporting shaft is inserted. The second connecting portion (20) may be a sliding structure. According to the above structure, a load applied to the first (10) and second (20) connecting portions may be reduced so as to reduce a rate of defects of the product.

## Description

### CROSS-REFERENCE TO RELATED APPLICATION

This application claims the benefit of Korean Patent Application No. 10-2016-0115571, filed on September 8, 2016, in the Korean Intellectual Property Office, the disclosure of which is incorporated herein in its entirety by reference.

### BACKGROUND

### 1. Field

One or more embodiments relate to a binding machine for gardening, and more particularly, to a connecting structure between a tape receiving box and a tape guide stand, and covers thereof.

### 2. Description of the Related Art

In general, in a case of garden products or climbing crops, such as cucumbers, grapes, melons, tomatoes, etc., while gradually growing from young seedlings, stems or branches are broken or drop down onto the ground due to weight of the branches and fruits or due to a rainstorm, and thus, in order to prevent the above problems, props are set up at predetermined intervals, guiding strings are mounted thereto, and then, the stems or branches are tied and fixed to the props and guiding strings.

That is, if the garden products or climbing crops which grow with stems and branches stretching out long and narrowly are left as they are, because the stems and branches are broken and drop down onto the ground due to weight of the branches and fruits or due to a rainstorm, the stems and branches are tied to props and guiding strings to fix them to grow straight. To do this, according to the related art, stems and branches of crops are bound to props or guiding strings by tapes using a binder for gardening to fix them to grow properly, and Korean Patents No. 10-0347635 (gardening binder) and No. 10-0779500 (binding machine for gardening) disclose binders for gardening.

Such a binder for gardening includes a tape guide having a tape case at a side thereof and installed at a lower portion of a body, and a binding needle supply mounted on an upper portion of the body, so that a binding tape wound as a roll inside the tape case may be pulled by a pulling pin. Next, seedlings and props to be bound are surrounded by using the binding tape in an operating space provided between the body and an elevating operator, and the elevating operator is attached to the binding needle supply so that the binding tape may be fixed by a binding pin and cut by using a cutting knife, and then, the seedlings and the prop may be bound to each other via the binding tape.

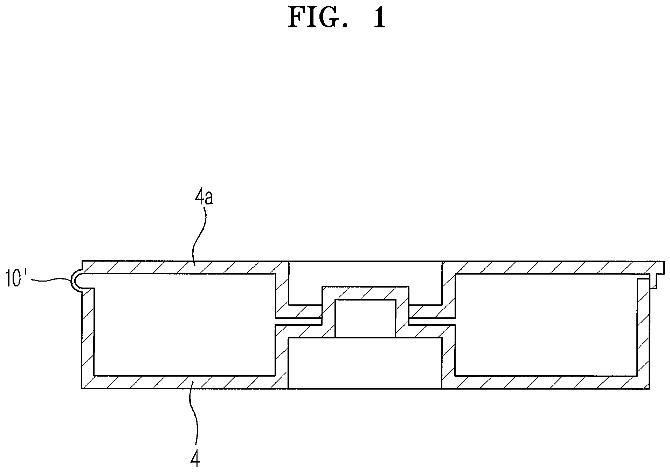

As shown in FIG. 1, a tape case 4 included in a binder for gardening according to the related art includes a case cover 4a that may open/close, so that the binding tape or other various components of the binder for gardening may be put in the tape case 4 and stored safely with the case cover 4a closed.

However, the tape case 4 and the tape cover 4a are provided in a hinged manner in which a connecting portion 10' includes a thin film, so that they may be opened/closed in a half division manner, and in the above type, shock is transferred to the connecting portion 10' whenever the case cover 4a is opened/closed, and thus, the connecting portion 10' may be torn out or damaged even if it has not been used for a long time period. As such, if the tape case 4 and the case cover 4a are isolated from each other, it is impossible to store the binding tape and the various components in the tape case 4. Thus, a body 1 including a tape guide 2 and the tape case 4 has to be replaced altogether, and accordingly, is inefficient and unnecessarily high in cost.

### SUMMARY

One or more embodiments include a binding machine for gardening, in which connecting portions between a tape case and a tape guide and covers thereof are provided as a connecting tube or a connecting rod so as to reduce a load applied to the connecting portion and increase lifespan of a product, and even when the connecting portion is damaged, only a component or a cover, that is, a necessary portion, may be replaced without replacing all parts of the connecting portion.

One or more embodiments include a binding machine for gardening including a plurality of coupling portions when opening/closing a cover of a tape case, so that coupling may be firmly maintained when the cover of the tape case is closed and the cover may not be suddenly loosened even when a user uses the binding machine for gardening in any kind of environment.

Additional aspects will be set forth in part in the description which follows and, in part, will be apparent from the description, or may be learned by practice of the presented embodiments.

According to one or more embodiments, there is provided a binding machine for gardening, in which a tape case including a case cover that is openable and closable and a tape guide including a guide cover that is openable and closable are provided at a lower portion of a body, and a binding needle supply is mounted on an upper portion of the body, wherein a binding tape wound as a roll inside the tape case is pulled by a pulling pin, seedlings and props to be bound are surrounded by the binding tape in an operating space provided between the body and an elevating operator, and the elevating operator is attached to the binding needle supply so that the binding tape is fixed by a binding pin and cut by a cutting knife, and then, the seedlings and the prop are bound to each other via the binding tape, the binding machine includes: a connecting portion via which the case cover is connected to the tape case so as to be openable and closable, wherein the first connecting portion includes a first supporting shaft of a cylindrical shape, and a first sleeve having an inner diameter portion at least partially surrounding the first supporting shaft.

The first sleeve may include: a first connecting tube of a cylindrical shape including a first pin insertion hole therein and provided on an outer side surface of the tape case; and a second connecting tube of a cylindrical shape including a second pin insertion hole therein and provided on an outer side surface of the case cover, wherein the first supporting shaft may include a first fixing pin that is inserted into the first pin insertion hole and the second pin insertion hole that connect the first connecting tube and the second connecting tube in a state where the first connecting tube and the second connecting tube are alternately arranged, and the case cover may be freely rotatable within a predetermined angle relative to the tape case so as to be openable and closable.

The first supporting shaft may include a first connecting rod of a cylindrical shape at a side of an outer side surface of one of the tape case and the case cover, the first sleeve may include a fifth connecting tube having a cross-section of a partially cut loop shape corresponding to an outer diameter of the first connecting rod, wherein the fifth connecting tube may be provided on a side of an outer surface of the other of the tape case and the case cover to correspond to the first connecting rod, and the first connecting rod may be inserted into and coupled to the fifth connecting tube so that the case cover is freely rotatable within a predetermined angle relative to the tape case so as to be openable and closable.

The binding machine may further include a second connecting portion connecting the guide cover to the tape guide so as to be openable and closable, wherein the second connecting portion may include a second supporting shaft of a cylindrical shape, and a second sleeve having an inner diameter portion at least partially surrounding the second supporting shaft.

The second sleeve may include: a third connecting tube of a cylindrical shape including a third pin insertion hole therein and provided on an outer side surface of the tape guide; and a fourth connecting tube of a cylindrical shape including a fourth pin insertion hole therein and provided on an outer side surface of the guide cover, the second supporting shaft may include a second fixing pin that is inserted into the third pin insertion hole and the fourth pin insertion hole that connect the third connecting tube and the second connecting tube in a state where the third connecting tube and the fourth connecting tube are alternately arranged, and the guide cover may be freely rotatable within a predetermined angle relative to the tape guide so as to be openable and closable.

The second supporting shaft may include a second connecting rod of a cylindrical shape at a side of an outer side surface of one of the tape guide and the guide cover, the second sleeve may include a sixth connecting tube having a cross-section of a partially cut loop shape corresponding to an outer diameter of the second connecting rod, wherein the sixth connecting tube is provided on a side of an outer surface of the other of the tape guide and the guide cover so as to correspond to the second connecting rod, and the second connecting rod may be inserted into and coupled to the sixth connecting tube so that the guide cover is freely rotatable within a predetermined angle relative to the tape guide to be opened and closed.

The second connecting portion may include sliding rail recesses having a predetermined length along a lengthwise direction of the tape guide and located at opposite side surfaces of the tape guide, and sliding protrusions having a predetermined length along a lengthwise direction of the guide cover and located at opposite side surfaces of the guide cover to correspond to the sliding rail recesses, and when the sliding protrusions of the guide cover are inserted into the sliding rail recesses, the tape guide may be closed, and when the sliding protrusions are slid out of the sliding rail recesses, the tape guide may be opened.

A receiving recess may be formed in an outer side surface of the tape guide along a lengthwise direction of the tape guide, and a staple repairing tool may be mounted in the receiving recess.

A plurality of reinforcing ribs which are inclined may be arranged in the guide cover along a lengthwise direction of the guide cover.

The binding machine may further include a plurality of coupling portions for coupling the case cover and the tape case in a closed state.

### BRIEF DESCRIPTION OF THE DRAWINGS

These and/or other aspects will become apparent and more readily appreciated from the following description of the embodiments, taken in conjunction with the accompanying drawings in which:
FIG. 1 is a lateral cross-sectional view of a tape case and a case cover included in a binder for gardening, according to the related art;
FIG. 2 is a block diagram of a binding machine for gardening, according to an embodiment of the present disclosure;
FIG. 3 is a perspective view of a tape case and a tape guide in a binding machine for gardening, according to an embodiment of the present disclosure;
FIG. 4 is a perspective view showing a case cover and a guide cover in an opened state in a binding machine for gardening, according to an embodiment of the present disclosure;
FIG. 5 is a side view of a case cover and a guide cover in a closed state in a binding machine for gardening, according to an embodiment of the present disclosure;
FIG. 6 is a cross-sectional view taken along line A-A' of FIG. 5;
FIG. 7 is a cross-sectional view taken along line B-B' of FIG. 5;
FIG. 8 is a partial diagram of an accommodation recess in a binding machine for gardening, according to an embodiment of the present disclosure;
FIG. 9 is a diagram showing a case cover and a guide cover in an opened state in a binding machine for gardening, according to another embodiment of the present disclosure;
FIG. 10 is a cross-sectional view taken along line C-C' of FIG. 9;
FIG. 11 is a cross-sectional view taken along line D-D' of FIG. 9; and
FIG. 12 is a cross-sectional view showing a coupling structure of a guide cover in a binding machine for gardening, according to another embodiment of the present disclosure.

### DETAILED DESCRIPTION

Hereinafter, one or more embodiments of the present disclosure will be described in detail with reference to accompanying drawings. In the drawings, like reference numerals denote the same elements. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure.

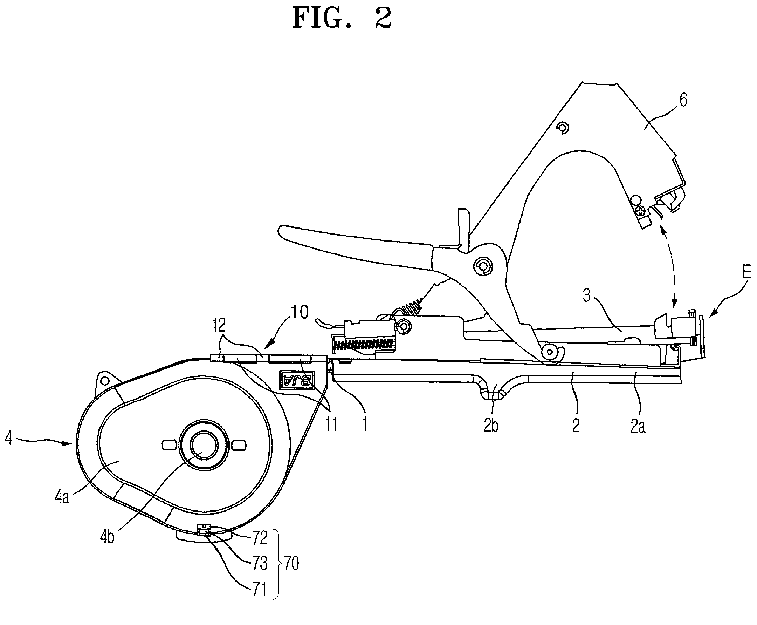

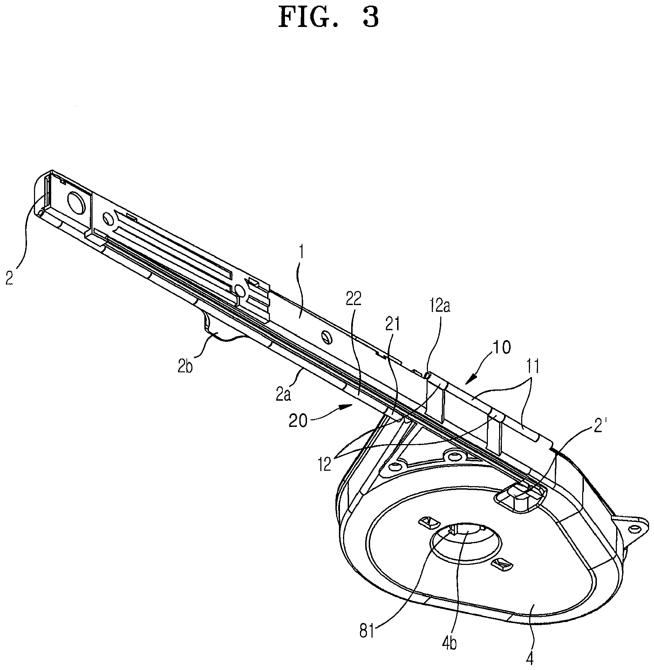

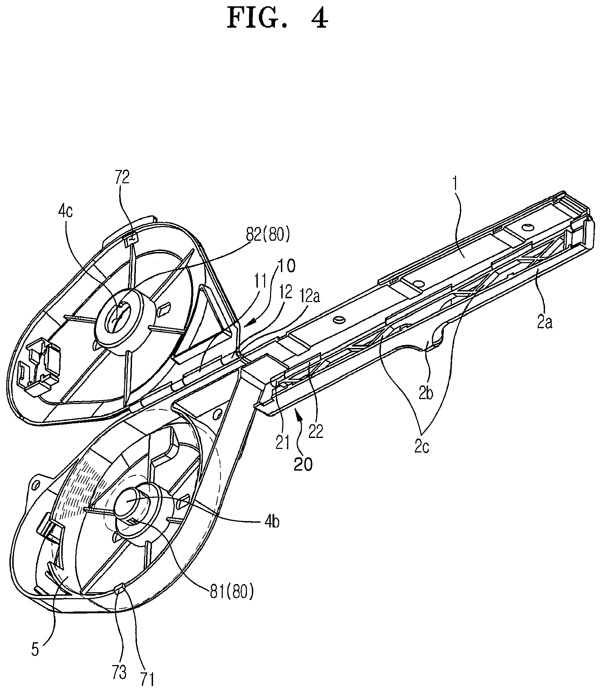

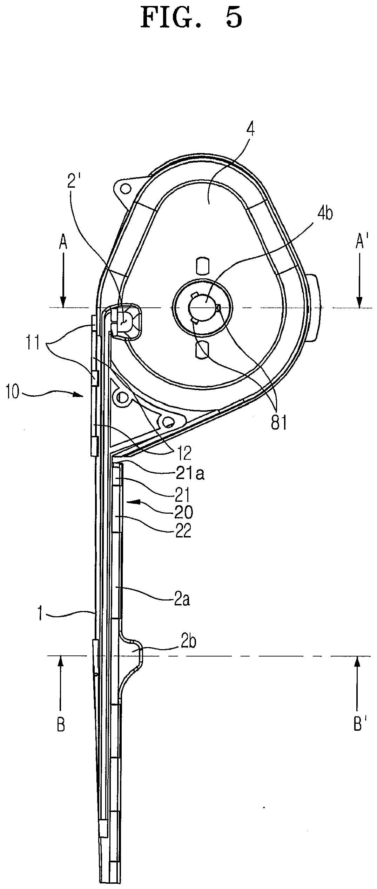

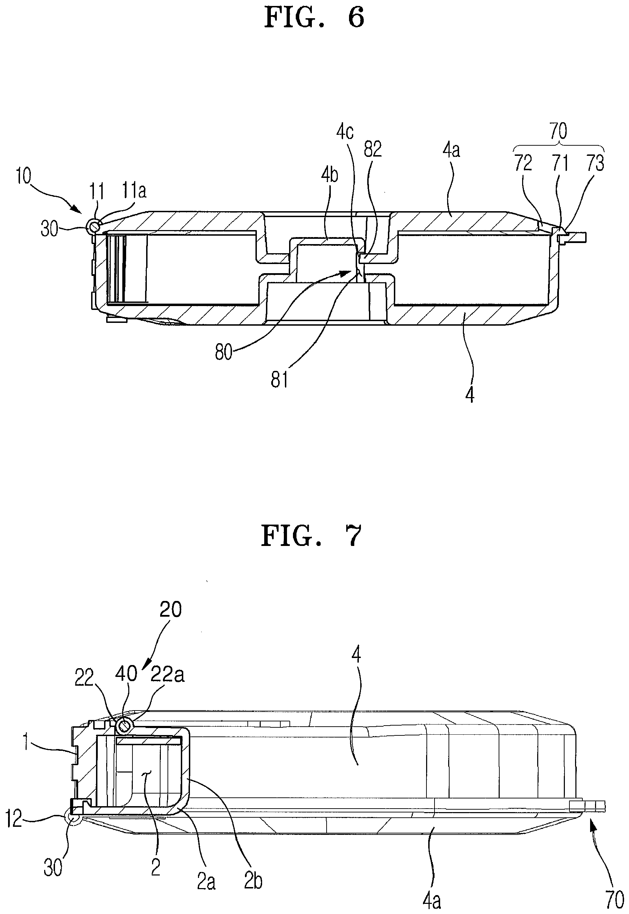

FIG. 2 is a block diagram of a binding machine for gardening, according to an embodiment of the present disclosure. FIG. 3 is a perspective view of a tape case and a tape guide in the binding machine for gardening, according to the embodiment. FIG. 4 is a perspective view showing a case cover and a guide cover in opened state in the binding machine for gardening, according to the embodiment. FIG. 5 is a side view showing the case cover and the guide cover in a closed state in the binding machine for gardening, according to the embodiment. FIG. 6 is a cross-sectional view taken along line A-A' of FIG. 5. FIG. 7 is a cross-sectional view taken along line B-B' of FIG. 5.

Referring to FIGS. 2 to 7, the binding machine for gardening, according to an embodiment of the present disclosure, includes a tape case 4 including a case cover 4a that may open/close, and a tape guide 2 including a guide cover 2a that may open/close. The tape case 4 and the tape guide 2 are provided at a lower portion of the body 1. A binding needle supply 3 is provided on an upper portion of a body 1. A binding tape 5 that is wound as a roll and accommodated in the tape case 4 is pulled out by using a pulling pin, and then, seedlings and a prop that are to be bound are covered by the binding tape 5 in an operating space of a binding portion E provided between the body 1 and an elevating operator 6. After that, the elevating operator 6 is attached to the binding needle supply 3, and then, the binding tape 5 is fixed by using a binding needle and cut by using a cutting knife to bind the seedlings and the prop by using the binding tape 5.

The case cover 4a is connected to the tape case 4 via a first connecting portion 10 so that it may be opened/closed. The first connecting portion 10 includes a first supporting shaft of a cylindrical shape, and a first sleeve having an inner diameter portion at least partially surrounding the first supporting shaft. The first supporting shaft may be provided as a pin or a rod.

As an example, the first sleeve may include a first connecting tube 11 provided in the tape case 4, and a second connecting tube 12 provided in the case cover 4a. A plurality of first connecting tubes 11, each having a cylindrical shape and including a first pin insertion hole 11a of a circular shape, are successively arranged with predetermined intervals therebetween along a lengthwise direction of the body 1 at a side of an outer side surface of the tape case 4. Like the first connecting tube 11, a plurality of second connecting tubes 12, each having a second pin insertion hole 12a of a circular shape, are successively arranged with predetermined intervals therebetween along a lengthwise direction at a side of an outer side surface of the case cover 4a. The first and second insertion holes 11 a and 12a are examples of the inner diameter portion. The first supporting shaft includes a first fixing pin 30 that is inserted into the first and second pin insertion holes 11 a and 12a.

In order to connect the case cover 4a to the tape case 4, the first fixing pin 30 of a predetermined length is inserted into the first and second pin insertion holes 11a and 12a connecting the first and second connecting tubes 11 and 12 to each other, in a state where the first and second connecting tubes 11 and 12 are alternately arranged. Then, the case cover 4a may be opened/closed by being freely rotated relative to the tape case 4 within a predetermined angle.

As described above, in the embodiment of the present disclosure, the case cover 4a is injection-molded separately from the tape case 4, and the first and second connecting tubes 11 and 12 respectively provided in the case cover 4a and the tape case 4 are coupled to each other via the fixing pin 30, so that the case cover 4a connected to the tape case 4 may be opened/closed.

The guide cover 2a is connected to the tape guide 2 via a second connecting portion 20 so that it may be opened/closed. The second connecting portion 20 may employ the same structure as that of the first connecting portion 10. The second connecting portion 20 includes a second supporting shaft of a cylindrical shape, and a second sleeve including an inner diameter portion at least partially surrounding the second supporting shaft. The second supporting shaft may be provided as a pin or a rod.

As an example, the second sleeve may include a third connecting tube 21 provided in the tape guide 2, and a fourth connecting tube 22 provided in the guide cover 2a. A plurality of third connecting tubes 21, each having a cylindrical shape and having a second pin insertion hole 21 a of a circular shape, are successively arranged at predetermined intervals therebetween along a lengthwise direction of the body 1 at a side of an outer side surface of the tape guide 2. Like the third connecting tube 21, a plurality of fourth connecting tubes 22, each having a third pin insertion hole 22a of a circular shape, are successively arranged with predetermined intervals therebetween along a lengthwise direction at a side of an outer side surface of the guide cover 2a. The third and fourth insertion holes 21 a and 22a are examples of the inner diameter portion. The second supporting shaft includes a second fixing pin 40 that is inserted into the third and fourth pin insertion holes 21a and 22a.

In order to connect the guide cover 2a to the tape guide 2, the second fixing pin 40 of a predetermined length is inserted into the third and fourth pin insertion holes 21 a and 22a connecting the third and fourth connecting tubes 21 and 22 to each other, in a state where the third and fourth connecting tubes 21 and 22 are alternately arranged. Then, the guide cover 2a may be opened/closed by being freely rotated within a predetermined angle relative to the tape.

As described above, in the embodiment of the present disclosure, the guide cover 2a is injection-molded separately from the tape guide 2, and the third and fourth connecting tubes 21 and 22 respectively formed in the guide cover 2a and the tape guide 2 are coupled to each other via the second fixing pin 40, so that the guide cover 2a connected to the tape guide 2 may be opened/closed.

Accordingly, according to the related art, if the first and second connecting portions 10 and 20 are damaged, all parts integrally formed with the first and second connecting portions 10 and 20 have to be replaced, creating a large burden for a user, but in the embodiment of the present disclosure, only a part that has a problem in the first and second connecting portions 10 and 20 may be replaced, and thus, use of the product may be economical. That is, if the first connecting tube 11 or the third connecting tube 21 has a problem, only the tape case 4 or the tape guide 2 may be replaced, and if the second connecting tube 12 or the fourth connecting tube 22 has a problem, a corresponding component, that is, the case cover 4a or the guide cover 2a, may be replaced.

In addition, the binding machine for gardening, according to the embodiment of the present disclosure, may further include a plurality of coupling portions for coupling the case cover 4a to the tape case 4 in a closed state.

As an embodiment, a first coupling portion 70 and a second coupling portion 80 are provided between the tape case 4 and the case cover 4a so that the case cover 4a may be coupled to the tape case 4 when the case cover 4a is closed. Since the plurality of coupling portions are used, the coupling between the tape case 4 and the case cover 4a is maintained when the case cover 4a is closed on the tape case 4, and thus, when the user uses the binding machine in any environment, loosening of the cover may be prevented.

To do this, the first coupling portion 70 may be provided at an opposite side to the connecting portion 10 in which the first and second connecting tubes 11 and 12 are provided. In more detail, a first hooking protrusion 71 including a hooking step 73 at an end portion thereof is provided at a side opposite the first connecting tube 11 on an outer side surface of the tape case 4, and a first stopper groove 72 may be formed on an outer side surface of the case cover 4a at a location corresponding to the first hook protrusion 71. In addition, the first hooking protrusion 71 passes through the first stopper groove 72 so that the hooking step 73 is engaged with the first stopper groove 72, and thus, the tape case 4 and the case cover 4a may be coupled to each other.

The second coupling portion 80 may be provided at center portions of the tape case 4 and the case cover 4a. In more detail, one or more second stopper grooves 81 are provided on a side of a supporting pillar 4b located at the center of the tape case 4, and one or more second hooking protrusions 82 corresponding to the one or more second stopper grooves 81 may be provided in a supporting recess 4c formed at the center of the case cover 4a at a location corresponding to the supporting pillar 4b.

As such, when the tape case 4 and the case cover 4a are closed, the supporting pillar 4b of the tape case 4 is engaged with the supporting recess 4c of the case cover 4a, and at the same time, the second hooking protrusions 82 are engaged with the second stopper grooves 81. Thus, in addition to the first coupling portion 70 including the first hooking protrusion 71, the first stopper groove 72, and the hooking step 72, the coupling between the tape case 4 and the case cover 4a may be firmly performed.

Since the plurality of coupling portions including the first and second coupling portions 70 and 80 are provided, the coupling between the tape case 4 and the case cover 4a is firmly maintained when the case cover 4a is closed on the tape case 4. Thus, when the user uses the binding machine under any circumstance, the cover may not suddenly loosen, and thus, reliability of the binding operation and working efficiency may be also improved.

Also, the structure of the first coupling portion 70 may be applied to the tape guide 2 and the guide cover 2a, as well as the tape case 4. In this case, in order to open the guide cover 2a from the tape guide 2 that are firmly coupled to each other, the user may hold a guide grip 2b and push to open.

In addition, when working outdoors, the guide cover 2a elongated in the lengthwise direction thereof may be curved according to frequent usage and temperature variation, and accordingly, the connecting portion 10 may not be connected in a straight manner, but may be curved such that the guide cover 2a is impossible to open/close. Accordingly, in the embodiment of the present disclosure, a plurality of reinforcing ribs 2c are arranged in the guide cover 2a so as to be inclined along the lengthwise direction of the guide cover 2a, in order to prevent deformation.

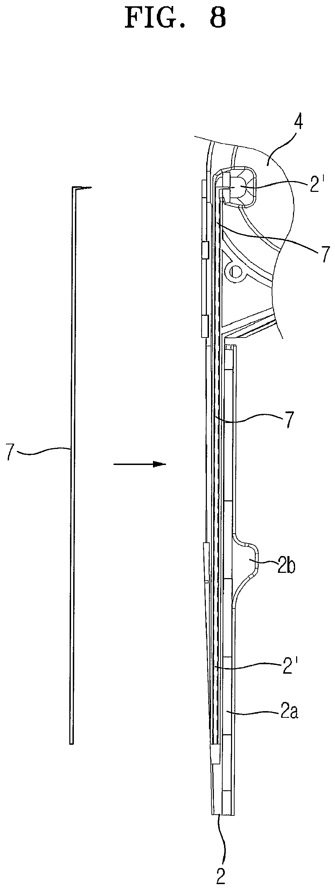

FIG. 8 is a partial diagram of an accommodation recess in a binding machine for gardening, according to an embodiment of the present disclosure.

Referring to FIG. 8, staples may become tangled in front of the binding needle supply 3 due to careless usage. Even when there are some staples remaining in the binding needle supply 3, additional staples may be inserted and thus, the staples may become tangled or stuck in the binding needle supply 3. Therefore, the staples may not be smoothly supplied, and in such a case, the binding machine has to be disassembled. Thus, according to the embodiment of the present disclosure, an accommodation recess 2' is provided at the outer side surface of the tape guide 2 along the lengthwise direction so that a staple repairing tool 7 may be mounted therein. According to the above structure, in a situation where a staple supplying error occurs outdoors, such as that described above, the staple repairing tool 7 may be pulled out to repair the error.

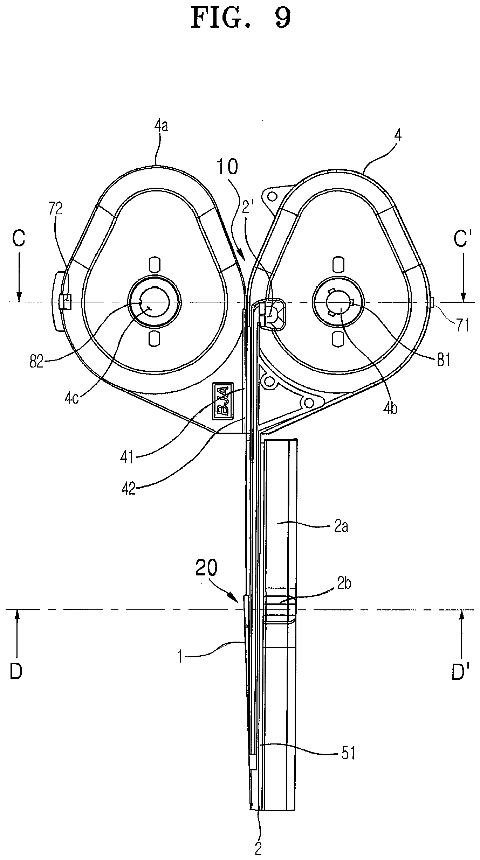

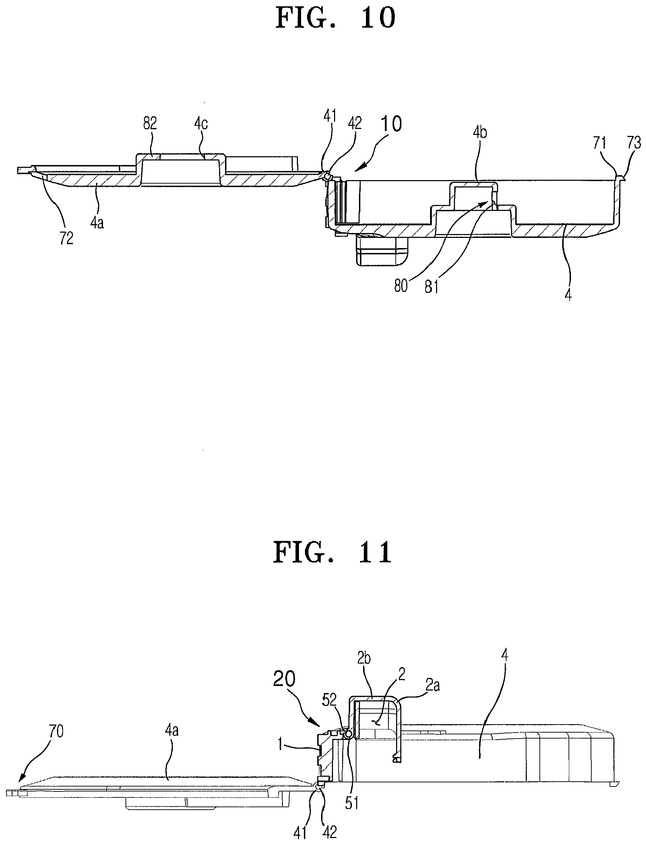

FIG. 9 is a diagram showing the case cover 4a and the guide cover 2a in an opened state in a binding machine for gardening, according to another embodiment of the present disclosure, FIG. 10 is a cross-sectional view taken along line C-C' of FIG. 9, and FIG. 11 is a cross-sectional view taken along line D-D' of FIG. 9.

Referring to FIGS. 9 to 11, the binding machine for gardening, according to another embodiment of the present disclosure, employs a fifth connecting tube 41 as a first sleeve, a first connecting rod 42 as a first supporting shaft, a sixth connecting tube 51 as a second sleeve, and a second connecting rod 52 as a second supporting shaft.

The first connecting rod 42 having a cylindrical shape and a predetermined length is arranged at a side of the outer surface of the tape case 4. A plurality of fifth connecting tubes 41 may be arranged with predetermined intervals therebetween along a lengthwise direction of the first connecting rod 42, at a side of the outer surface of the case cover 4a, and so as to correspond to the first connecting rod 42. The fifth connecting tube 41 may have a cross-section of a partially cut loop shape corresponding to an outer diameter of the first connecting rod 42. In addition, the fifth connecting tube 41 is inserted into and coupled to the first connecting rod 42, so that the case cover 4a may be freely rotated within a predetermined angle relative to the tape case 4 to be opened/closed.

Also, the second connecting rod 52 having a cylindrical shape and a predetermined length is arranged at a side of the outer surface of the tape guide 2. A plurality of sixth connecting tubes 51 may be arranged with predetermined intervals therebetween along a lengthwise direction of the second connecting rod 52, at a side of the outer surface of the guide cover 2a, and so as to correspond to the second connecting rod 52. The sixth connecting tube 51 may have a cross-section of a partially cut loop shape corresponding to an outer diameter of the second connecting rod 52.The sixth connecting tube 51 is inserted into and coupled to the second connecting rod 52, so that the guide cover 2a may be freely rotated within a predetermined angle relative to the tape guide 2 to be opened/closed.

Here, for convenience in a manufacturing process, the fifth connecting tube 41, the first connecting rod 42, the sixth connecting tube 51, and the second connecting rod 52 may include the same material as that of the tape case 4 and the tape guide 2. Generally the above elements may include a plastic material so as to have a light weight and durability simultaneously. In the binding machine for gardening having the above structure according to the present disclosure, a load applied to the connecting portion 10 may be reduced to improve lifespan of the product.

Moreover, in the present embodiment, the fifth connecting tube 41 and the first connecting rod 42, and the sixth connecting tube 51 and the second connecting rod 52, may not be essentially located at the tape case 4 and the case cover 4a, and the tape guide 2 and the guide cover 2a, but locations thereof may be exchanged. For example, the fifth connecting tube 41 may be arranged at a side of the outer surface of the tape case 4, and the first connecting rod 42 may be arranged at a side of the outer surface of the case cover 4a.

Also, the connecting structure illustrated in FIGS. 2 to 7 may be used as the first connecting portion 10, and the connecting structure illustrated in FIGS. 9 to 11 may be used as the second connecting portion 20. In another case, the connecting structure illustrated in FIGS. 9 to 11 may be used as the first connecting portion 10, and the connecting structure illustrated in FIGS. 2 to 7 may be used as the second connecting portion 20.

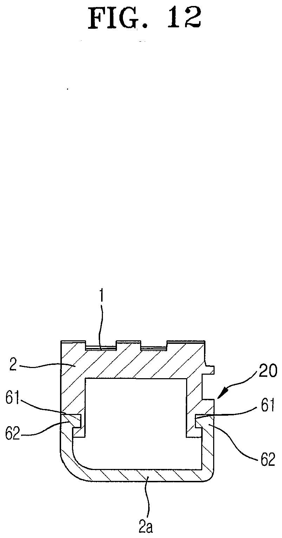

The second connecting portion 20 may connect the tape guide 2 and the guide cover 2a such that they may slide on each other. FIG. 12 is a cross-sectional view of a coupling structure of the guide cover 2a in a binding machine for gardening, according to another embodiment of the present disclosure. Referring to FIG. 12, sliding rail recesses 61 having a predetermined length along the lengthwise direction of the tape guide 2 are arranged in opposite side surfaces of the tape guide 2, and sliding protrusions 62 corresponding to the sliding rail recesses 61 having a predetermined length along the lengthwise direction of the guide cover 2a are provided at opposite side surfaces of the guide cover 2a, so that the tape guide 2 may be closed when the sliding protrusions 62 slide to be inserted into the sliding rail recesses 61 and opened when the sliding protrusions 62 slide out of the sliding rail recesses 61.

According to the present disclosure, the load applied to the connecting portions between the tape case and the tape guide, and the covers thereof, may be reduced, so as to greatly reduce a rate of defects of the product, and even when the connecting portion is damaged, only a necessary part, e.g., a component of the connecting portion or the cover, may be replaced, without the need to replace all the portions integrally provided with the connecting portion, and thus, use and maintenance of the binding machine is economically efficient.

Also, since the plurality of coupling portions are provided, coupling may be firmly maintained when the cover of the tape case is closed, the cover may not suddenly loosen when the user uses the binding machine under any circumstance. Thus, reliability of the binding operation and working efficiency may be improved.

Also, the receiving recess for accommodating the staple repairing tool is provided, and thus, when staples become tangled, the staple repairing tool may be pulled out to repair the error, and working efficiency may be improved.

In addition, since the reinforcing ribs are provided in the guide cover to reinforce the structure so that the guide cover may not be curved, the connecting portion may be maintained so as to be straight, thereby allowing the binding machine to be used for a long period of time.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope of the inventive concept as defined by the following claims.

Provided is a binding machine for gardening including a tape case having a case cover that may be opened/closed and a tape guide having a guide cover that may be opened/closed. At least one of a first connecting portion between the case cover and the tape case and a second connecting portion between the guide cover and the tape guide may include a sleeve including a cylindrical supporting shaft and an inner diameter portion in which the supporting shaft is inserted. The second connecting portion may be a sliding structure. According to the above structure, a load applied to the first and second connecting portions may be reduced so as to reduce a rate of defects of the product.

## Claims

1. A binding machine for gardening, in which a tape case including a case cover that is openable and closable and a tape guide including a guide cover that is openable and closable are provided at a lower portion of a body, and a binding needle supply is mounted on an upper portion of the body, wherein a binding tape wound as a roll inside the tape case is pulled by a pulling pin, seedlings and props to be bound are surrounded by the binding tape in an operating space provided between the body and an elevating operator, and the elevating operator is attached to the binding needle supply so that the binding tape is fixed by a binding pin and cut by a cutting knife, and then, the seedlings and the prop are bound to each other via the binding tape, the binding machine comprising:
a connecting portion via which the case cover is connected to the tape case so as to be openable and closable,
wherein the first connecting portion comprises a first supporting shaft of a cylindrical shape, and a first sleeve having an inner diameter portion at least partially surrounding the first supporting shaft.

2. The binding machine of claim 1, wherein the first sleeve comprises:
a first connecting tube of a cylindrical shape including a first pin insertion hole therein and provided on an outer side surface of the tape case; and
a second connecting tube of a cylindrical shape including a second pin insertion hole therein and provided on an outer side surface of the case cover,
wherein the first supporting shaft comprises a first fixing pin that is inserted into the first pin insertion hole and the second pin insertion hole that connect the first connecting tube and the second connecting tube in a state where the first connecting tube and the second connecting tube are alternately arranged, and
the case cover is freely rotatable within a predetermined angle relative to the tape case so as to be openable and closable.

3. The binding machine of claim 1 or claim 2, wherein the first supporting shaft comprises a first connecting rod of a cylindrical shape at a side of an outer side surface of one of the tape case and the case cover,
the first sleeve comprises a fifth connecting tube having a cross-section of a partially cut loop shape corresponding to an outer diameter of the first connecting rod, wherein the fifth connecting tube is provided on a side of an outer surface of the other of the tape case and the case cover to correspond to the first connecting rod, and
the first connecting rod is inserted into and coupled to the fifth connecting tube so that the case cover is freely rotatable within a predetermined angle relative to the tape case so as to be openable and closable.

4. The binding machine of any one of claims 1 to 3, further comprising a second connecting portion connecting the guide cover to the tape guide so as to be openable and closable,
wherein the second connecting portion comprises a second supporting shaft of a cylindrical shape, and a second sleeve having an inner diameter portion at least partially surrounding the second supporting shaft.

5. The binding machine of claim 4, wherein the second sleeve comprises:
a third connecting tube of a cylindrical shape including a third pin insertion hole therein and provided on an outer side surface of the tape guide; and
a fourth connecting tube of a cylindrical shape including a fourth pin insertion hole therein and provided on an outer side surface of the guide cover,
the second supporting shaft comprises a second fixing pin that is inserted into the third pin insertion hole and the fourth pin insertion hole that connect the third connecting tube and the second connecting tube in a state where the third connecting tube and the fourth connecting tube are alternately arranged, and
the guide cover is freely rotatable within a predetermined angle relative to the tape guide so as to be openable and closable.

6. The binding machine of claim 4, wherein the second supporting shaft comprises a second connecting rod of a cylindrical shape at a side of an outer side surface of one of the tape guide and the guide cover,
the second sleeve comprises a sixth connecting tube having a cross-section of a partially cut loop shape corresponding to an outer diameter of the second connecting rod, wherein the sixth connecting tube is provided on a side of an outer surface of the other of the tape guide and the guide cover so as to correspond to the second connecting rod, and
the second connecting rod is inserted into and coupled to the sixth connecting tube so that the guide cover is freely rotatable within a predetermined angle relative to the tape guide to be opened and closed.

7. The binding machine of any one of claims 1 to 3, wherein the second connecting portion comprises sliding rail recesses having a predetermined length along a lengthwise direction of the tape guide and located at opposite side surfaces of the tape guide, and sliding protrusions having a predetermined length along a lengthwise direction of the guide cover and located at opposite side surfaces of the guide cover to correspond to the sliding rail recesses, and
when the sliding protrusions of the guide cover are inserted into the sliding rail recesses, the tape guide is closed, and when the sliding protrusions are slid out of the sliding rail recesses, the tape guide is opened.

8. The binding machine of any one of claims 1 to 7, wherein a receiving recess is formed in an outer side surface of the tape guide along a lengthwise direction of the tape guide, and a staple repairing tool is mounted in the receiving recess.

9. The binding machine of any one of claims 1 to 8, wherein a plurality of reinforcing ribs which are inclined are arranged in the guide cover along a lengthwise direction of the guide cover.

10. The binding machine of any one of claims 1 to 9, further comprising a plurality of coupling portions for coupling the case cover and the tape case in a closed state.
